# EUROPEAN PATENT APPLICATION

(11) **EP 2 398 127 A2**
(43) Date of publication of application: **21.12.2011**
(21) Application number: 11169578.9
(22) Date of filing: 10.06.2011
(51) Int. Cl.: H02J 9/06, G06F 1/30, H02H 3/24

(54) **Power generating system**

(30) Priority: 15.06.2010 JP 2010136336
(71) Applicant: AISIN SEIKI KABUSHIKI KAISHA, Kariya-shi, Aichi-ken 448-8650 (JP)
(72) Inventor: Nakano, Yoshinobu, Aichi-ken,, 448-8650 (JP); Ohashi, Masayoshi, Aichi-ken,, 448-8650 (JP)
(74) Representative: Kuhnen & Wacker

(57) **Abstract**

A power generating system includes an engine (1), a generator (2), an inverter device (3) interconnected with a commercial power supply (43), and a control device (5) having a phase locked loop circuit (51), which includes an output port (513) connected to a PWM circuit (53) and increases a frequency of a command current (I_{P}) supplied thereto upon an input of a timing voltage signal (V_{P}) while the commercial power supply fails, wherein the control device controls the command current to correspond to phase of the timing voltage signal while the inverter device is actuated, fluctuates a phase of the command current by a first variable and calculates a phase difference between the command current and the timing voltage signal, in order to temporarily determine a possibility of the power outage, and then upon a temporal positive conclusion, the control device forcibly fluctuates the phase of the command current by a second variable and conclusively detects the power outage.

## Description

### TECHNICAL FIELD

This disclosure generally relates to a power generating system that interconnects a commercial power supply and a generator.

### BACKGROUND DISCUSSION

Disclosed in JP3950706B is a power generating system, which is used for a cogeneration system and the like and which includes an engine, a generator actuated by the engine, a first converter that converts an alternating current power (AC power) generated by the generator into a direct current (DC), a second converter that converts the DC converted by the first converter into a load alternating current power (load AC power) and that is interconnected to a commercial power supply, and a control device. In a case where a commercial power supply fails, an electric power supplied through a utility interconnection is lost. However, in this case, because an inverter device of the power generating system continues to generate and output the electric power, an occurrence of a power outage of the commercial power supply may not be appropriately detected on the basis of a voltage. Furthermore, in a case where the power outage occurs at the commercial power supply while an induction motor such as a grinder and the like is rotatably driven, frequency fluctuation may not occur, because the induction motor continues to rotate by its inertia so as to function as an induction generator and so as to apply the voltage to the commercial power supply although the commercial power supply fails. In this case, the detection of the power outage of the commercial power supply within a short time may become further difficult. However, in a case where detectivity of a power outage detecting device provided at the power generating system is increased, the commercial power supply may be determined to fail although the power outage does not occur at the commercial power supply. If misdetection occurs frequently, an interconnected time (i.e. a duration of time during which the commercial power supply and the power generating system are interconnected) may be excessively decreased, which may result in decreasing an output power generated by the power generating system.

A need thus exists to provide a power generating system causing less misdetection of a power outage of a commercial power supply in a case where an inverter device is actuated while being interconnected to the commercial power supply.

### SUMMARY

According to an aspect of this disclosure, a power generating system includes an engine, a generator actuated by the engine, an inverter device having a first converter converting an alternating current power generated by the generator into a direct current, a second converter converting the direct current converted by the first converter into a load alternating current power and being interconnected with a commercial power supply, and a gate drive circuit controlling the second converter in a switching manner, and a control device having a control portion including a central processing unit, controlling the inverter device and having a phase locked loop circuit, which includes an output port connected to a pulse width modulation circuit and through which a signal is outputted to the pulse width modulation circuit and increases an output frequency of a command current supplied to the pulse width modulation circuit from the output port in a case where a timing voltage signal obtained by transforming a voltage outputted from the second converter by an electric transformer while a power outage occurs at the commercial power supply is inputted into the control portion, the command current being outputted by the control device to the gate drive circuit controlling the second converter via the pulse width modulation circuit and the timing voltage signal being synchronized with the load alternating current power converted by the second converter and being inputted into the control portion of the control device via the electric transformer, wherein the control device is configured so as to control the command current to have a same phase relative to the timing voltage signal while the inverter device is actuated, fluctuate a phase of the command current by a first variable relative to the timing voltage signal in a predetermined cycle and calculate a phase difference of the command current relative to the timing voltage signal when the command current is displaced, so that the control device temporarily determines a possibility of the power outage of the commercial power supply in a case where the phase difference falls outside of a range of a threshold value, and after a temporal determination, the control device forcibly fluctuates the phase of the command current by a second variable, which is set to be greater than the first variable, relative to the timing voltage signal and conclusively determines whether or not the power outage occurs at the commercial power supply on the basis of a fluctuation of a frequency of the timing voltage signal generated when the phase of the command current is displaced by the second variable and the phase difference of the command current relative to the timing voltage signal.

Accordingly, an accuracy in a determination of an occurrence of the power outage at the commercial power supply in a case that the inverter device is actuated while being interconnected with the commercial power supply may be increased. Furthermore, a misdetermination of the occurrence of the power outage at the commercial power supply may be avoided.

According to a further aspect of this disclosure, the control device further includes a phase comparator, which has a first input port through which the timing voltage signal is inputted and a second input port through which the command current outputted from the output port of the phase locked loop circuit is inputted. The phase comparator compares the phase of the command current with a phase of the timing voltage signal and outputs a phase difference signal corresponding to the phase difference to the phase locked loop circuit in order to clear the phase difference in a case where the phase difference of the command current relative to the timing voltage signal is generated. The phase locked loop circuit adjusts the phase of the command current to correspond to the phase of the timing voltage signal on the basis of the phase difference signal in order to clear the phase difference. The control portion further includes an output port, through which a command for forcibly fluctuating the phase of the command current relative to the timing voltage signal is outputted to the phase locked loop circuit at predetermined cycle intervals.

According to a further aspect of this disclosure, an output port of the commercial power supply and an output port of the inverter device are connected to an indoor electric power load.

According to a further aspect of this disclosure, the indoor electric power load includes an induction motor.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a system diagram illustrating a power generating system according to an embodiment;

Fig. 2 is a waveform chart indicating a timing voltage signal;

Fig. 3 is a waveform chart indicating a timing of a first variable and a timing of a second variable; and

Fig. 4 is a flowchart illustrating a process executed by a control portion according to the embodiment.

### DETAILED DESCRIPTION

[Brief overview]

A control device of a power generating system according to this disclosure includes a phase comparator having a first input port, through which a timing voltage signal is inputted, and a second input port, through which a command current outputted from an output port of a phase locked loop circuit (i.e. a PLL circuit) is inputted. In this case, the phase comparator compares a phase of the command current and a phase of the timing voltage signal. In a case where a difference (i.e. a phase difference) occurs between the phase of the command current relative to the phase of the timing voltage signal, the phase comparator outputs a phase difference signal, which corresponds to the phase difference, to the PLL circuit in order to clear the phase difference. Furthermore, the PLL circuit adjusts the phase of the command current so as to correspond to the phase of the timing voltage signal on the basis of the phase difference signal in order to clear the phase difference. Still further, the control portion includes an output port through which the control portion outputs a command for forcibly fluctuating the phase of the command current relative to the timing voltage signal to the PLL circuit at predetermined cycle intervals.

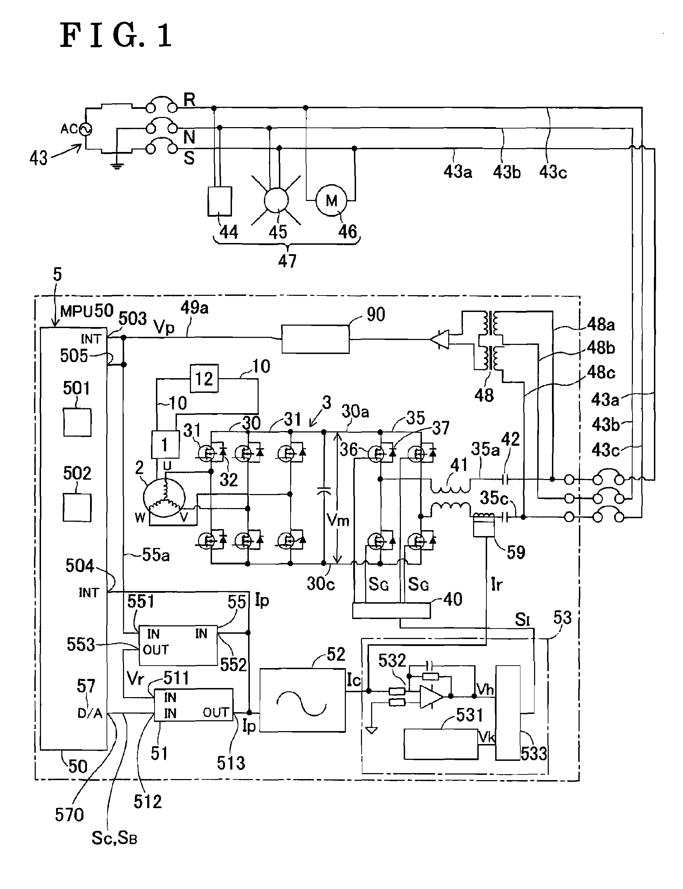

An embodiment of a power generating system will be described below with reference to Figs. 1 to 4 of the attached drawings. The power generating system includes an engine 1, which is driven by a fuel, a generator 2, which is rotatably actuated by the engine so as to generate an electric power, and an inverter device 3. Exhaust heat of the engine 1 is used as warm water at a heating device, such as a warm water using device 12 and the like, through an engine coolant circuit 10. The inverter device 3 includes a first converter 30, which converts an alternating current power (i.e. AC power) generated by the generator 2 into a direct current (i.e. DC), and a second converter 35, which converts the DC converted by the first converter 30 into a load alternating current power (i.e. load AC power) and which is interconnected to a commercial power supply 43. The first converter 30 includes plural first switching elements 31, which convert the AC power generated by the generator 2 into the DC, and plural first flywheel diodes 32. The second converter 35 is connected to the first converter 30 via wires 30a and 30c. Furthermore, the second converter 35 includes plural second switching elements 36, which convert the DC power converted by the first converter 30 into the load AC power, and plural second flywheel diodes 37. A direct current intermediate voltage (i.e. DC intermediate voltage) Vₘ at the wires 30a and 30c indicates a voltage at an intermediate point between the first converter 30 and the second converter 35.

A gate signal S_{G} for turning on the second switching elements 36 of the second convert 35 is inputted into the second switching elements 36 from a gate drive circuit 40. The second converter 35 is interconnected to the commercial power supply 43 via reactors 41, relays 42, wires 35a and 35c, and wires 43a, 43b and 43c and the like. An indoor electric power load 47 such as an electric power load 44, a lamp 45 and an induction motor 46 and the like are connected to each of the commercial power supply 43 and the inverter device 3 via the wires 43a, 43b and 43c, respectively, so that the electric power load 44, the lamp 45 and the induction motor 46 are actuated in response to an electric power supplied thereto from the commercial power supply 43 and the inverter device 3. Wires 48a, 48b and 48c, each of which is connected to the commercial power supply 43 and the second converter 35, are connected to an electric transformer 48. A current sensor 59 is provided on the wire 35c.

In this embodiment, a voltage outputted from the electric transformer 48 on the basis of the commercial power supply 43 or the second converter 35 is inputted into a control portion 50 from a first interruption port 503 and an analog-to-digital port 505 (i.e. an A/D port 505) via a filter 90 as a timing voltage signal V_{P}.

A control device 5 includes the control portion 50 (a microprocessor unit, i.e. MPU), a phase locked loop circuit 51 (which will be hereinafter referred to as a PLL circuit 51) having an output port 513 through which a command current I_{P} is outputted, a sine wave generator 52 generating a sine wave signal I_{C} based on the command current I_{P} outputted from the output port 513 of the PPL circuit 51, a pulse width modulation circuit 53 (which will be hereinafter referred to as a PWM circuit 53) into which the sine wave signal I_{C} outputted from the sine wave generator 52 is inputted, and a phase comparator 55. As illustrated in Fig. 1, the power generating system includes a conductive path starting from the PLL circuit 51 to the PWM circuit 53, the second converter 35, the electric transformer 48 and returning to the PLL circuit 51. The control portion 50 includes a central processing unit 501 (i.e. a CPU 501), a memory 502, the first interruption port 503, a second interruption port 504 into which the command current I_{P} outputted from the output port 513 of the PLL circuit 51 is inputted as an interruption signal, the A/D port 505 and a digital-to-analog converter 57 (i.e. a D/A converter 57) converting a digital signal into an analog signal.

The phase comparator 55 includes a first input port 551 into which the timing voltage signal V_{P} is inputted, a second input port 552 into which the command current I_{P} outputted from the output port 513 of the PLL circuit 51 is inputted, and an output port 553. Furthermore, the phase comparator 55 is configured so as to compare a phase of the command current I_{P} inputted thereinto from the second input port 552 with a phase of the timing voltage signal V_{P} inputted thereinto from the first input port 551. In a case where a difference (i.e. a phase difference) exists between the phase of the command current I_{P} and the phase of the timing voltage signal V_{P} (i.e. in a case where the phase of the command current I_{P} is displaced relative to the phase of the voltage signal V_{P}), the phase comparator 55 outputs a phase difference signal Vr corresponding to the phase difference to a first input port 511 of the PLL circuit 513 in order to clear the phase difference.

The PLL circuit 51 is configured so as to include a function of locking the phase of the command current I_{P} relative to the phase of the timing voltage signal V_{P} in order to clear the phase difference. Consequently, the phase of the command current I_{P} outputted from the output port 513 of the PLL circuit 51 may be set to have the same phase as the phase of the timing voltage signal V_{P}. Accordingly, in a case where the inverter device 3 is actuated, a phase of a current outputted by the second converter 35 may be adjusted to have the same phase as the phase of the timing voltage signal V_{P}, which is inputted into the control portion 50 from the second converter 35 or the commercial power supply 43 via the electric transformer 48, through the PLL circuit 51 and the PWM circuit 53.

The PWM circuit 53 includes a triangle wage generator 531 generating a triangle wave voltage signal V_{K}, a reference voltage generating portion 532 generating a reference voltage signal Vₕ proportional to a current value of the command current I_{P}, and a comparator 533 comparing the triangle wave voltage signal V_{K} with the reference voltage signal Vₕ. Furthermore, the PWM circuit 53 outputs a control signal S₁ corresponding to the current value of the command current I_{P} to the gate drive circuit 40. Accordingly, turning on and off of the second switching elements 36 of the second comparator 35 is controlled by the gate signal S_{G}, which is outputted from the gate drive circuit 40, so that the load AC power is generated by the second comparator 35. The timing voltage signal V_{P} is inputted into the first interruption port 503 of the control portion 50 via a wire 49a and into the first input port 551 of the phase comparator 55 via a wire 55a. In this embodiment, the inverter device 3 outputs a current having the same phase as the timing voltage signal V_{P} to the indoor electric power load 47 from the second converter 35.

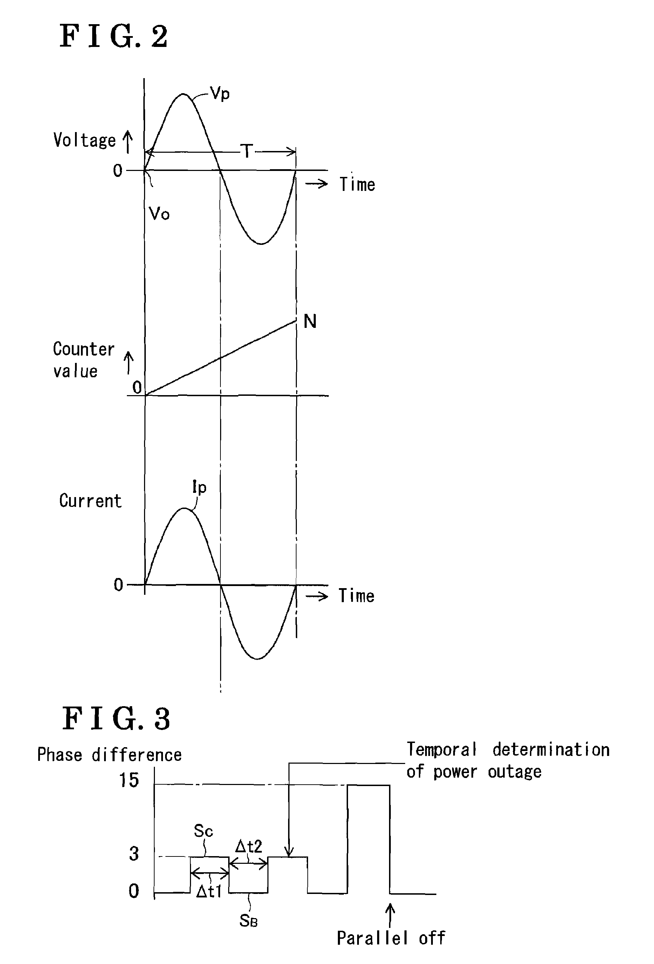

Illustrated in Fig. 2 is one cycle of the timing voltage signal V_{P} and one cycle of the command current I_{P} having the same phase as the timing voltage signal V_{P}. The timing voltage signal V_{P} is a signal inputted into the first interruption port 503 of the control portion 50. More specifically, the timing voltage signal V_{P} has the same phase as the load AC power outputted from the second converter 35 of the inverter device 3 or the commercial power supply 43 via the electric transformer 48. On the other hand, the command current I_{P} is a current outputted to the sine wave generator 52 from the output port 513 of the PLL circuit 51. A period T corresponding to one cycle of the timing voltage signal V_{P} in Fig. 2 corresponds to a counter value N (e.g. N = 10000) of a counter included in the control portion 50. Counting of the counter value N by the control portion 50 starts from a zero cross Vₒ of the timing voltage signal V_{P}. For example, in a case where the phase of the command current I_{P} relative to the phase of the timing voltage signal V_{P} is delayed (displaced) by 90 degrees, the phase difference of 90 degrees corresponds to N/4 of the counter value. In a case where the phase of the command current I_{P} relative to the phase of the timing voltage signal V_{P} is delayed (displaced) by 3 degrees, the phase difference of 3 degrees corresponds to N/120 of the counter value. In a case where the phase of the command current I_{P} relative to the phase of the timing voltage signal V_{P} is delayed (displaced) by 15 degrees, the phase difference of 15 degrees corresponds to the N/24 of the counter value. In other words, in a case where the phase of the command current I_{P} relative to the phase of the timing voltage signal V_{P} is delayed (displaced) by D degree(s), the phase difference of D degree(s) corresponds to N/(360/D) of the counter value. As described above, the phase comparator 55 and the control portion 50 are configured so as to obtain the phase difference of the command current I_{P} relative to the timing voltage signal V_{P} on the basis of the counter value.

According to this embodiment, in a case where the commercial power supply 43 and the inverter device 3 are interconnected with each other, the control portion 50 of the control device 5 instantaneously inputs a signal S_{C}, whose pulse is in a rectangular shape (see Fig. 3), into a second input port 512 of the PLL circuit 51 from an output port 570 of the D/A converter 57 for a predetermined time Δt1 (e.g. 200 milliseconds), in order to forcibly and instantaneously displace (fluctuate) the phase of the command current I_{P} by a first variable so as to form an angle three degrees (3°) relative to the timing voltage signal V_{P} in a predetermined cycle (e.g. any value within a range of 10 to 2000 milliseconds), thereby intentionally generating a fluctuation to a reactive power. Accordingly, the PLL circuit 51 supplies the command current I_{P} to the sine wave generator 52 from the output port 513 as a signal defining a phase timing. The sine wave generator 52 outputs a signal, which has a wave height value (i.e. a current value) corresponding to the DC intermediate voltage Vₘ of the inverter device 3, as a current command value I_{C} while following the phase timing based on the command current I_{P}. The PWM circuit 53 compares the current command value I_{C} and an actual current value Iᵣ inputted into the PWM circuit 53 from the current sensor 59. Then, the PWM circuit 53 outputs a current, whose phase is forcibly displaced to form the angle of three degrees (3°) relative to the timing voltage signal V_{P}, to the gate drive circuit 40. Then, after the predetermined time Δt1 has elapsed, the control portion 50 of the control device 5 inputs a signal S_{B} for adjusting the phase of the command current I_{P} to have the same phase as the timing voltage signal V_{P} into the second input port 512 of the PLL circuit 51 from the output port 570 of the D/A converter 57 for a predetermined time Δt2 (e.g. 200 milliseconds). Accordingly, the command current I_{P} is adjusted to have the same phase as the timing voltage signal V_{P}.

In the case where the phase of the command current I_{P} is forcibly displaced so as to form the angle of three degrees (3°) relative to the timing voltage signal V_{P}, the control portion 50 determines whether or not the phase difference of the command current I_{P} relative to the timing voltage signal V_{P} is actually three degrees (3°) on the basis of the counter value. In this case, while the commercial power supply 43 is in a normal state (i.e. while the commercial power supply 43 does not fail), the obtained phase difference is expected to fall within a range of a threshold value corresponding to three degrees. Therefore, the control portion 50 determines that no power outage occurs at the commercial power supply 43. However, in a case where the power outage occurs at the commercial power supply 43, the phase difference corresponding to three degrees is not likely to be obtained, so that the phase difference falls outside of the range of the threshold value corresponding to three degrees. Accordingly, in the case where the phase difference of the command current I_{P} relative to the timing voltage signal V_{P} falls outside of the range of the threshold value use for the phase difference, the control portion 50 of the control device 5 temporarily determines a possibility of the power outage at the commercial power supply 43.

At a timing when a temporal determination by the control device 5 is concluded, which serves as a trigger, the control portion 50 of the control device 5 outputs the signal S_{B} for forcibly and rapidly raise the command current I_{P} by a second variable, which is greater than the first variable, so as to fluctuate the phase of the command current I_{P} so as to form an angle of fifteen degrees (15°) relative to the timing voltage signal V_{P}, to the PLL circuit 51 from the output port 570 of the D/A converter 57. In this case, while no power outage occurs at the commercial power supply 43, changes in frequency of the timing voltage signal V_{P} fall within a threshold value used for the frequency and are relatively small. Furthermore, in this case, the phase difference of the command current I_{P} relative to the timing voltage signal V_{P} falls within the range of the threshold value used for the phase difference and is relatively small. Accordingly, the control portion 50 of the control device 5 determines that there is no possibility of the power outage occurring at the commercial power supply 43.

In a case where the commercial power supply 43 fails while the induction motor 46 is rotatably driven, the induction motor 46 continues to rotate by its inertia so as to function as an induction generator although the commercial power supply 43 fails, which may result in applying the voltage to the commercial power supply 43. Accordingly, fluctuation in the frequency of the timing voltage signal V_{P} may not occur.

In this embodiment, in a case where the second variable is great and where the commercial power supply 43 fails, the changes in the frequency of the timing voltage signal V_{P} follow a degree (a level) of the second variable, so that the changes in the frequency of the timing voltage signal V_{P} fall outside of the range of the threshold value used for the frequency. Furthermore, in the case where the power outage occurs at the commercial power supply 43, the PLL circuit 51 generates a relatively great fluctuation in the frequency of the timing voltage signal V_{P}, because the PLL circuit 51 is configured so that the frequency of the command current I_{P} outputted from the output port 513 increases in the case of the power outage. The fluctuation of the frequency is set to have a degree so as to overcome the inertia of the induction motor 46. Furthermore, while the power outage occurs at the commercial power supply 43, the phase difference of the command current I_{P} relative to the timing voltage signal V_{P} follows the degree of the second variable so as to fall outside of the threshold value used for the phase difference.

Accordingly, in the case where the frequency of the timing voltage signal V_{P} falls outside of the threshold value used for the frequency and further, in the case where the phase difference falls outside of the threshold value used for the phase difference, the control portion 50 of the control device 5 conclusively determines that the commercial power supply 43 fails.

According to the first embodiment, in the case where the inverter device 3 is actuated while being interconnected to the commercial power supply 43 as described above, the control portion 50 of the control device 5 inputs the signal S_{C} for generating the phase difference of three degrees at the phase of the command current I_{P} relative to the timing voltage signal V_{P} (by the first variable) in a predetermined cycle into the second input port 512 of the PLL circuit 51 from the D/A converter 57 at the predetermined cycle (Δt1, Δt2). Furthermore, the control portion 50 detects the phase difference between the command current I_{P} and the timing voltage signal V_{P}, so that the control portion 50 determines that the commercial power supply 43 does not fail in the case where the phase difference corresponds to three degrees. Accordingly, the control portion 50 temporarily and periodically (Δt1, Δt2) determines the possibility of the power outage of the commercial power supply 43.

In a case where the power outage actually occurs at the commercial power supply 43, the phase difference of the command current I_{P} relative to the timing voltage signal V_{P} does not correspond to three degrees (3°) because the voltage of the commercial power supply 43 is lost when the power outage occurs at the commercial power supply 43. Therefore, the control portion 50 of the control device 5 inputs the signal S_{C} for generating the phase difference of fifteen degrees (15°) at the command current I_{P} relative to the timing voltage signal V_{P} (by the second variable) into the second input port 512 of the PLL circuit 51 from the output port 570 of the D/A converter 57 at the timing when the power outage occurs at the commercial power supply 43 as a trigger. Accordingly, the reactive power increases, so that a balance between the output and the load is lost and the DC intermediate voltage Vₘ fluctuates, which results in greatly fluctuating the command current I_{P} relative to the timing voltage signal V_{P}. As a result, a voltage root means square value (i.e. a voltage RMS value) of the timing voltage signal V_{P} also fluctuates and the phase of the command current I_{P} relative to the timing voltage signal V_{P} greatly changes. Therefore, in a case where the voltage RMS value of the timing voltage signal V_{P} falls outside of the range of the threshold value and where the phase difference of the command current I_{P} relative to the timing voltage signal V_{P} falls outside of the range of the threshold value used for the phase difference, the control device 5 conclusively determines that the power outage occurs at the commercial power supply 43.

The PLL circuit 51 is configured so that the frequency of the current outputted from the output port 513 of the PLL circuit 51 automatically increases in the case that the power outage occurs at the commercial power supply 43. Therefore, in a case where the frequency of the timing voltage signal V_{P} falls outside of the range of the threshold value used for the frequency, the control device 5 conclusively determines that the power outage occurs at the commercial power supply 43. Accordingly, a determination accuracy of the occurrence of the power outage of the commercial power supply 43 may be increased.

Even in the case where the command current I_{P} is displaced so as to form the phase difference of fifteen degrees (by the second variable) relative to the timing voltage signal V_{P}, the control device 5 determines that the power outage does not occur at the commercial power supply 43 if the fluctuation of the timing voltage signal V_{P} falls within the range of the threshold value used for the phase difference. Accordingly, a misdetermination of the power outage of the commercial power supply 43 may be avoided.

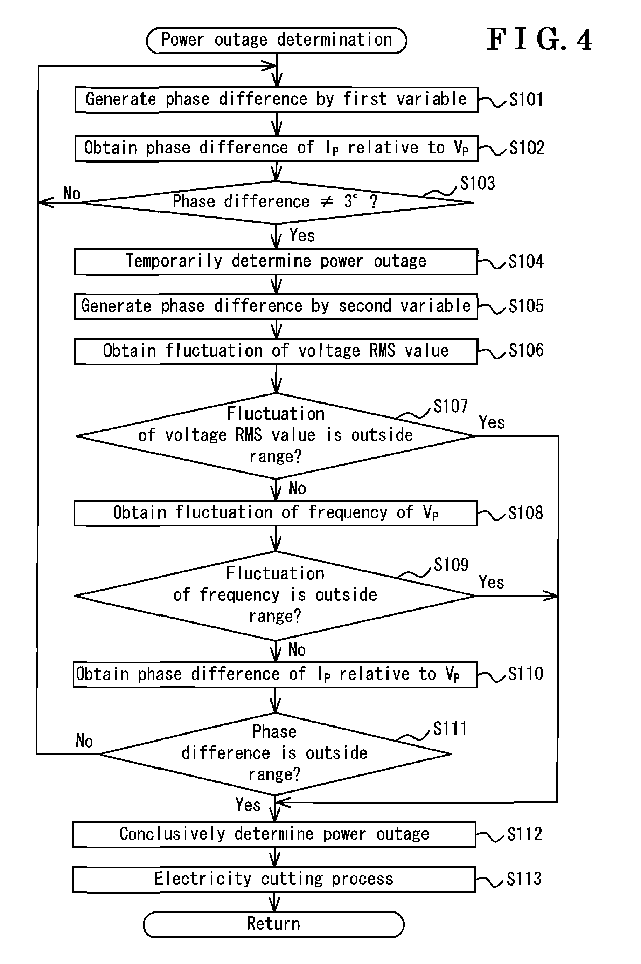

A detailed process executed by the control portion 50 of the control device 5 will be described below with reference to Fig. 4. As illustrated in Fig. 4, in a case where the inverter device 3 is actuated so as to generate a predetermined output while being interconnected to the commercial power supply 43, the control portion 50 of the control device 5 executes a process of inputting the signal S_{C} for displacing the command current I_{P} so as to generate the phase difference of three degrees (3°) (by the first variable) relative to the timing voltage signal V_{P} in the predetermined cycle into the second input port 512 of the PLL circuit 51 from the output port 570 of the D/A converter 57 (step S101). Then, the control portion 50 obtains the phase difference of the command current I_{P} relative to the timing voltage signal V_{P} (step S102). In the case where the phase difference corresponding to three degrees (3°) is obtained (No in step S103), the control device 5 temporarily determines that the commercial power supply 43 is in the normal state and the power outage does not occur at the commercial power supply 43. Then, the process returns to step S101. In the case where the power outage occurs at the commercial power supply 43, the phase difference of the command current I_{P} relative to the timing voltage signal V_{P} no longer corresponds to three degrees (3°) (Yes in step S103). Therefore, in this case, the control portion 50 temporarily determines that the power outage occurs at the commercial power supply 43 (step S104).

Using the temporal determination as the trigger, the control portion 50 of the control device 5 executes a process of inputting the signal S_{C} for displacing the command current I_{P} so as to generate the phase difference of fifteen degrees (15°) (by the second variable) relative to the timing voltage signal V_{P} into the second input port 512 of the PLL circuit 52 from the output port 570 of the D/A converter 57 (step S105). Accordingly, the reactive power increases, which results in losing the balance between the output and the load. In this case, the DC intermediate voltage Vₘ fluctuates and the timing and fluctuation in a waveform of each of the timing voltage signal V_{P} and the command current I_{P} increase. As a result, the voltage RMS value of the timing voltage signal V_{P} also fluctuates. Furthermore, the phase of the command current I_{P} relative to the timing voltage signal V_{P} also greatly changes. Therefore, the control portion 50 obtains the changes (the fluctuation) of the voltage RMS value of the timing voltage signal V_{P} (step S106). In the case where the fluctuation of the voltage RMS value of the timing voltage signal V_{P} falls outside of the range of the threshold value (Yes in step S107), the control portion 50 conclusively determines that the power outage occurs at the commercial power supply 43 (step S112). Furthermore, the control device 5 executes a process of cutting electricity to the commercial power supply 43, such as cutting the interconnection between the commercial power supply 43 and the inverter device 3 (step S113).

The PLL circuit 51 is configured so that the frequency of the command current I_{P} outputted from the output port 513 of the PLL circuit 51 automatically increases in the case where the power outage actually occurs at the commercial power supply 43. Accordingly, in this embodiment, the control portion 50 obtains the fluctuation of the frequency of the timing voltage signal V_{P} (step S108) even in the case where the voltage RMS value of the timing voltage signal V_{P} falls within the range of the threshold value used for the voltage RMS value (No in step S107), in order to increase accuracy in the detection of the occurrence of the power outage at the commercial power supply 43. In the case where the fluctuation of the frequency falls outside of the range of the threshold value used for the frequency (Yes in step S109), the control device 5 conclusively determines that the power outage occurs at the commercial power supply 43 (step S112) and then executes the process of cutting the electricity to the commercial power supply 43 (step S113).

The control portion 50 obtains the phase difference of the command current I_{P} relative to the timing voltage signal V_{P} (step S110) even in the case where the fluctuation of the frequency falls within the range of the threshold value used for the frequency (No in step S109). In the case where the phase difference falls outside of the range of the threshold value (Yes in step S111), the control portion 50 conclusively determines that the power outage occurs at the commercial power supply 43 (step S112). Then, the control portion 50 executes the process of cutting the electricity to the commercial power supply 43 such as cutting the interconnection between the commercial power supply 43 and the inverter device 3 (step S113). On the other hand, in the case where the fluctuation of the frequency falls within the range of the threshold value use for the frequency (No in step S109) and where the phase difference of the command current I_{P} relative to the timing voltage signal V_{P} falls within the range of the threshold value (No in step S111), the control portion 50 determines that the power outage does not occur at the commercial power supply 43 and the process returns to step S101.

According to the embodiment, in the case where the possibility of the power outage at the commercial power supply 43 is temporarily determined to be high, the control portion 50 generates the phase difference (by the second variable) between the command current I_{P} and the timing voltage signal V_{P} and then, the control portion 50 determines whether or not the power outage occurs at the commercial power supply 43 on the basis of plural parameters. Accordingly, the misdetermination of the power outage at the commercial power supply 43 may be avoided. Any selective desired values, by which the possibility of the power outage at the commercial power supply 43 is determined on the basis of an actuating state of each of the inverter device 3 and the commercial power supply 43 and the like, may be adapted as the threshold value of each parameter.

According to the embodiment, in the case where the phase difference is generated on the basis of the second variable, the voltage RMS value of the timing voltage signal V_{P}, the fluctuation of the frequency of the timing voltage signal V_{P} and the phase difference of the command current I_{P} relative to the timing voltage signal V_{P} are obtained in the above-mentioned order. However, the power generating system according to the embodiment may be modified so that the fluctuation of the frequency of the timing voltage signal V_{P}, the voltage RMS value of the timing voltage signal V_{P}, the phase difference of the command current I_{P} relative to the timing voltage signal V_{P}, the fluctuation of the frequency of the timing voltage signal V_{P} and the voltage RMS value of the timing voltage signal V_{P} may be obtained in the above-mentioned order.

[Other embodiments]

In the above-mentioned embodiment, the first variable is set to so as to generate the phase difference of three degrees (3°) between the command current I_{P} and the timing voltage signal V_{P} and the second variable is set so as to generate the phase difference of fifteen degrees (15°) between the command current I_{P} and the timing voltage signal V_{P}. However, the first variable may be set so as to generate a phase difference falls within a range between, for example, two to seven degrees (2° to 7°), between the command current I_{P} and the timing voltage signal V_{P} and the second variable may be set so as to generate a phase difference in a range between, for example, ten to twenty degrees (10° to 20°). In a case where the second variable is set to be excessively great, a strain of the timing voltage signal VP may become unfavorably excessive. Therefore, a value obtained by dividing the second variable by the first variable may be set so as to wall within a range between 2.5 to 7 or between 3 to 6. The power generating system according to this disclosure is not limited to the above-described embodiments and drawings. The power generating system according to this disclosure may be changed or modified without departing from the spirit and scope of this disclosure.

## Claims

1. A power generating system comprising:
an engine (1);
a generator (2) actuated by the engine (1);
an inverter device (3) having a first converter (30) converting an alternating current power generated by the generator (2) into a direct current, a second converter (35) converting the direct current converted by the first converter (30) into a load alternating current power and being interconnected with a commercial power supply (43), and a gate drive circuit (40) controlling the second converter (35) in a switching manner; and
a control device (5) having a control portion (50) including a central processing unit (501), controlling the inverter device (3) and having a phase locked loop circuit (51), which includes an output port (513) connected to a pulse width modulation circuit (53) and through which a signal is outputted to the pulse width modulation circuit (53) and increases an output frequency of a command current (I_{P}) supplied to the pulse width modulation circuit (53) from the output port (513) in a case where a timing voltage signal (V_{P}) obtained by transforming a voltage outputted from the second converter (35) by an electric transformer (48) while a power outage occurs at the commercial power supply (43) is inputted into the control portion (50), the command current (I_{P}) being outputted by the control device (5) to the gate drive circuit (40) controlling the second converter (35) via the pulse width modulation circuit (53) and the timing voltage signal (V_{P}) being synchronized with the load alternating current power converted by the second converter (35) and being inputted into the control portion (50) of the control device (5) via the electric transformer (48), wherein
the control device (5) is configured so as to control the command current (I_{P}) to have a same phase relative to the timing voltage signal (V_{P}) while the inverter device (3) is actuated, fluctuate a phase of the command current (I_{P}) by a first variable relative to the timing voltage signal (V_{P}) in a predetermined cycle and calculate a phase difference of the command current (I_{P}) relative to the timing voltage signal (V_{P}) when the command current (I_{P}) is displaced, so that the control device (5) temporarily determines a possibility of the power outage of the commercial power supply (43) in a case where the phase difference falls outside of a range of a threshold value, and
after a temporal determination, the control device (5) forcibly fluctuates the phase of the command current (I_{P}) by a second variable, which is set to be greater than the first variable, relative to the timing voltage signal (V_{P}) and conclusively determines whether or not the power outage occurs at the commercial power supply (43) on the basis of a fluctuation of a frequency of the timing voltage signal (V_{P}) generated when the phase of the command current (I_{P}) is displaced by the second variable and the phase difference of the command current (I_{P}) relative to the timing voltage signal (V_{P}).

2. The power generating system according to Claim 1, wherein the control device (5) further includes a phase comparator (55), which has a first input port (551) through which the timing voltage signal (V_{P}) is inputted and a second input port (552) through which the command current (I_{P}) outputted from the output port (513) of the phase locked loop circuit (51) is inputted, the phase comparator (55) compares the phase of the command current (I_{P}) with a phase of the timing voltage signal (V_{P}) and outputs a phase difference signal corresponding to the phase difference to the phase locked loop circuit (51) in order to clear the phase difference in a case where the phase difference of the command current (I_{P}) relative to the timing voltage signal (V_{P}) is generated, the phase locked loop circuit (51) adjusts the phase of the command current (I_{P}) to correspond to the phase of the timing voltage signal (V_{P}) on the basis of the phase difference signal in order to clear the phase difference, and the control portion (5) further includes an output port (570), through which a command for forcibly fluctuating the phase of the command current (I_{P}) relative to the timing voltage signal (V_{P}) is outputted to the phase locked loop circuit (51) at predetermined cycle intervals.

3. The power generating system according to Claim 1, wherein an output port of the commercial power supply (43) and an output port of the inverter device (3) are connected to an indoor electric power load (47).

4. The power generating system according to Claim 3, wherein the indoor electric power load includes an induction motor (46).
